# EUROPÄISCHE PATENTANMELDUNG

(11) **EP 3 594 847 A1**
(43) Veröffentlichungstag der Anmeldung: **15.01.2020**
(21) Anmeldenummer: 18183162.9
(22) Anmeldetag: 12.07.2018
(51) Int. Cl.: G06K 9/00

(54) **BENUTZERUNTERSTÜTZTES AUTOMATISCHES TEXTERKENNUNGSVERFAHREN BEI LOGISTIKPROZESSEN**

(71) Anmelder: Siemens Aktiengesellschaft, 80333 München (DE)
(72) Erfinder: BÖNSCH, Wolfgang, 78333 Stockach (DE)
(74) Vertreter: Maier, Daniel Oliver

(57) **Zusammenfassung**

Die Erfindung betrifft ein benutzerunterstütztes automatisches Texterkennungsverfahren (1) bei Logistikprozessen und ein diesbezügliches System zur benutzerunterstützten automatischen Texterkennung (1) bei Logistikprozessen.

Bei dem benutzerunterstützten automatischen Texterkennungsverfahren (1) bzw. der benutzerunterstützten automatischen Texterkennung (1) wird ein Aktionsbereich (2) in einem einem Benutzer angezeigten Bild (3) zeigend zumindest ein Logistikgut (4) unter Verwendung von eye-tracking (5) bei dem Benutzer beim Betrachten des Bildes (3) bestimmt und in Abhängigkeit des bestimmten Aktionsbereichs (2) eine Aktion (6) des benutzerunterstützten automatischen Texterkennungsverfahren bzw. der benutzerunterstützten automatischen Texterkennung (1) durchgeführt.

## Beschreibung

Die Erfindung betrifft ein benutzerunterstütztes automatisches Texterkennungsverfahren bei Logistikprozessen und ein diesbezügliches System zur benutzerunterstützten automatischen Texterkennung bei Logistikprozessen.

In https://de.wikipedia.org/wiki/Texterkennung (erhältlich am 11.07.2018) sind Grundlagen einer Texterkennung beschrieben.

Texterkennung (auch meist als optische Zeichenerkennung (kurz "OCR" bzw. optical character recognition) bezeichnet) ist ein Begriff aus der Informationstechnik und bezeichnet eine automatisierte Texterkennung innerhalb von Text aufweisenden Bildern.

Texterkennung ist deshalb notwendig, weil optische Eingabegeräte, wie Scanner oder Digitalkameras, aber auch Faxempfänger, als Ergebnis ausschließlich Rastergrafiken (kurz vereinfacht "(Pixel-)Bilder") liefern können, d. h. Text bzw. Zeichen als in Zeilen und Spalten angeordnete Punkte unterschiedlicher Färbung (Pixel).

Texterkennung bezeichnet dabei die Aufgabe, die (grafisch bzw. bildlich) dargestellten Zeichen eines Textes (in/auf einem Dokument/(Pixel-)Bild) als solche zu erkennen, d. h. zu identifizieren und ihnen - beispielsweise im Falle von Buchstaben - einen Zahlenwert zuzuordnen, der ihnen nach üblicher Textkodierung zukommt (ASCII, Unicode).

Diesbezügliche Mittel für eine Texterkennung sind entsprechende Softwareprogramme, welche die Texterkennung durchführen.

(Automatische) Texterkennung wird auch im Bereich der Logistik und bei dortigen (logistischen bzw. Logistik-) Prozessen eingesetzt.

Logistik stellt einen Wirtschaftszweig oder eine Abteilung in Organisationen, die sich mit der Planung, Steuerung, Optimierung und Durchführung von Güter-, Informations- und Personenströmen befassen, dar. Zu diesen Strömen zählt das Transportieren, Lagern, Umschlagen, Kommissionieren, Sortieren, Verpacken und Verteilen. Bei Stückgütern spricht man vom Materialfluss.

Bei Stückgütern wie Postsendungen bezeichnet man so dann den Logistikzweig als Postlogistik; bei Stückgütern, beispielsweise Gepäckstücke, an Flughäfen wird dieser als Flughafenlogistik bezeichnet.

Postlogistik umfasst so insbesondere das (prozessuale) Konzept, das ein Postdienstleister benutzt, um eine Postsendung schnell, fehlerfrei und kostengünstig vom Absender bis zum Empfänger zu transportieren. Das prozessuale Konzept im Postmarkt teilt sich meist in (die) drei Bereiche:
1. das Einsammeln von Postsendungen, wie Briefe, Pakete o. Ä., über Briefkästen, Filialen oder Abholdienste,
2. die Beförderung der Postsendungen in die Region der Zustellung und
3. die Zustellung bis zum Empfänger, die auch häufig als "die letzte Meile" bezeichnet wird.

Damit eine Postsendung, die - beispielsweise hier in Deutschland - bei einem Postdienstleister aufgegeben wurde, in die richtige Zustellregion befördert wird, entnimmt das Sortierzentrum des Postdienstleisters zunächst einem auf der Postsendung angebrachten/vorhandenen Anschriften-/Adressfeld (Zustell-) Informationen, wie beispielsweise Ländercodes, Ländernamen, Städtecodes, Städtenamen, Straßennamen, Hausnummern u. Ä..

Dazu "lesen" automatische Sortiermaschinen - unter Verwendung von automatischer Texterkennung - das ((pixel-) bildlich erfasste) Anschriften-/Adressfeld (d. h. es wird (automatisch mittels optischer Systeme) ein (Pixel-) Bild der Postsendung mit dessen Anschriften-/Adressfeld erstellt) - hier in der Regel von unten nach oben vom Ländercode/Ländernamen bis zum Straßennamen - und übertragen die "gelesenen" bzw. mittels der Texterkennung verarbeiteten (Zustell-) Informationen mit einer eigenen kodierten Maschinenschrift ("Maschinenkode") auf die Postsendung ("Sendungskodierung").

Im Sortierzentrum des Sendungszentrums der Zustellregion brauchen die dortigen Sortiermaschinen nur noch die kodierte Maschinenschrift/Maschinenkode bzw. die kodierte (Zustell-) Information lesen (, was in der Regel wiederum automatisch mittels Texterkennung erfolgt), um die Postendung dem richtigen Zustellbezirk zuzuordnen und ihn danach in die richtige Gangfolge des Zustellers zu sortieren.

Entsprechendes gilt auch für die Flughafenlogistik (und dortigen Prozessen) bei dortigen Gepäcksortieranlagen, wo ebenfalls die an den Gepäckstücken angebrachten Gepäckinformationen automatisch - unter Verwendung von automatischer Texterkennung - "gelesen" werden.

Für einen bestimmten Prozentsatz können - bei der automatischen Texterkennung - nicht alle (Zustell-) Informationen des bzw. im Anschriften-/Adressfeld eines logistischen Gutes, wie der Postsendung oder dem Gepäckstück, bzw. dessen Bild erkannt bzw. gelesen werden.

In diesen Fällen "nicht erkannter/gelesener" (Zustell-) Informationen von logistischen Gütern werden diese dann "manuell" durch einen Benutzer, d. h. eine Kodierkraft, wie ein Postsendungs-Kodierkraft, (nach-) bearbeitet.

Eine solche Kodierkraft gibt - für das durch die automatische Texterkennung "nicht erkannte logistische Gut" - die Adressregion auf dessen Bild "manuell" vor (d. h. hier wird der Kodierkraft an "ihrem" Kodier-Arbeitsplatz das Bild des logistischen Gutes mittels eines Anzeigegeräts, beispielsweise eines Bildschirms, angezeigt, in welchem bzw. auf welchem Bild sie dann die Adressregion vorgibt) und ein sogenannter OCR-Retry-Leseschritt versucht dann die (Zustell-) Informationen im Anschriften-/Adressfeld mit Hilfe der "manuell" vorgegebenen Adressregion doch noch automatisch zu lesen.

Dieser OCR-Retry-Leseschritt "funktioniert" auch nur bedingt, d. h., auch hier werden für einen bestimmten Prozentsatz solcher manuell nachbearbeiteter logistischer Güter nicht alle (Zustell-) Informationen im jeweiligen Anschriften-/Adressfeld bzw. dessen Bild erkannt bzw. gelesen. Insbesondere dann, wenn die (Zustell-) Informationen, wie Adressangaben, nicht nach üblicher Norm geschrieben sind, beispielsweise, wenn, wie gelegentlich bei kleinen Paketen aus Asien, eine Adresse/Anschrift in einer Zeile geschrieben wurde oder ein Straßenname und ein Ortsname vertauscht wurden oder ein Postcode an einer ganz anderen Stelle steht etc..

Aufgabe der Erfindung ist es, Nachteile im Stand der Technik, insbesondere bei Logistikprozessen, im Speziellen bei Prozessen bei der Post- und Flughafenlogistik, d.h. insbesondere bei dortiger Postsendungsverteilung/Gepäckverteilung, zu verbessern.

Insbesondere ist es eine Aufgabe der Erfindung, die Logistikprozesse, wie im Speziellen Prozesse bei der Post- und Flughafenlogistik bzw. die dortige Postsendungsverteilung/Gepäckverteilung, schneller, sicherer und zuverlässiger zu machen.

Diese Aufgabe wird gelöst durch ein benutzerunterstütztes automatisches Texterkennungsverfahren bei Logistikprozessen und ein diesbezügliches System zur benutzerunterstützten automatischen Texterkennung bei Logistikprozessen mit den Merkmalen des jeweiligen unabhängigen Anspruchs. Weiterbildungen ergeben sich auch aus den abhängigen Ansprüchen und beziehen sich auf das Verfahren wie auch auf das System (beides vereinfacht auch nur als "benutzerunterstützte Texterkennung mittels eye-tracking" bzw. noch kürzer nur "benutzerunterstützte Texterkennung" bezeichnet).

Nach dem benutzerunterstützten automatischen Texterkennungsverfahren bei Logistikprozessen, wie insbesondere einer Postlogistik oder einer Flughafenlogistik, ist vorgesehen, dass die Benutzerunterstützung bei dem benutzerunterstützen automatischen Texterkennungsverfahren derart erfolgt, dass ein Aktionsbereich in einem einem Benutzer angezeigten Bild, d. h. einem Rastergrafikbild bzw. Pixelbild, zeigend zumindest ein Logistikgut (auch kurz nur "Logistikbild" oder nur "Bild"), beispielsweise zeigend eine Postsendung, wie einen Brief oder ein Paket, oder ein Gepäckstück, wie einen Koffer oder eine Tasche, unter Verwendung von eye-tracking bei dem Benutzer beim Betrachten des Bildes bestimmt wird.

Der Aktionsbereich des Bildes/im Bild - , auf welchem der Blick des Benutzers gerichtet ist/war und welcher dabei durch das eye-tracking bestimmt wird/wurde, - ist dabei zweckmäßigerweise derjenige Bildbereich des/im Bild(es), welcher zu lesende bzw. zu erkennende Textinhalte, wie Zustell- oder Adressinformationen, beispielsweise Ländercodes, Ländernamen, Städtecodes, Städtenamen, Straßennamen, Hausnummern u. Ä., enthält.

Mit eye-tracking soll das Aufzeichnen der hauptsächlich aus Fixationen/Fokussierungen (Punkte/-bereiche, die man genau betrachtet), Sakkaden (schnellen Augenbewegungen) und Regressionen bestehenden Blickbewegungen einer Person verstanden werden. Als eye-tracker werden Geräte und Systeme (für das eye-tracking) bezeichnet, die die Aufzeichnung vornehmen und eine Analyse der Blicke bzw. Blickbewegungen ermöglichen.

Solche eye-tracker können in zwei verschiedene Bauweisen unterteilt werden: mobile eye-tracker, die fest auf dem Kopf des Probanden angebracht werden, beispielsweise eye-tracking Brillen, und solche, die extern installiert sind. Letztere kann man wiederum in zwei Kategorien unterteilen: Remote-Geräte, wie Kamera-Zeilen/-Bars, sowie solche, die mit einer Fixierung des Kopfes eines Probanden verbunden sind. (vgl. https://de.wikipedia.org/wiki/Eye-Tracking (erhältlich am 11.07.2018)) .

In Abhängigkeit des - durch das eye-tracking, beispielsweise unter Verwendung einer oder mehrerer eye-tracking Kameras/- zeilen bzw. -Bars oder einer eye-tracking Brille durchgeführten, - bestimmten Aktionsbereichs bei bzw. in dem dem Benutzer angezeigten Bild wird eine Aktion des benutzerunterstützen automatischen Texterkennungsverfahrens, insbesondere eine Texterkennung (hier wird dann der "Aktionsbereich" semantisch zu einem "Texterkennungsbereich"), durchgeführt.

Das System zur benutzerunterstützten automatischen Texterkennung bei Logistikprozessen sieht eine benutzerunterstütze automatische Texterkennung durchführbar bei einem Bild, d. h. ein Mittel zur Durchführung einer benutzerunterstützen automatischen Texterkennung, wie eine Texterkennungs-/OCR-Software, sowie ein eye-tracking bei einem Benutzer, d. h. ein Mittel zur Durchführung eines eye-trackings bei einem Benutzer, wie einen eye-tracker, beispielsweise eine oder mehrere eye-tracking Kameras oder eine eye-tracking Brille, vor.

Weiterhin ist bei dem System ein Anzeigemittel zum Anzeigen eines Bildes, beispielsweise ein (Computer-)Bildschirm, vorgesehen.

Ferner weist das System ein Systemmittel zur Durchführung der benutzerunterstützten automatischen Texterkennung bei Logistikprozessen auf.

Dieses Systemmittel ist dazu derart eingerichtet, dass ein Aktionsbereich in einem einem Benutzer von dem Anzeigemittel angezeigten Bild zeigend zumindest ein Logistikgut unter Verwendung von dem eye-tracking bei dem Benutzer beim Betrachten des Bildes bestimmbar ist, und in Abhängigkeit des bestimmten Aktionsbereichs eine Aktion der automatischen Texterkennung durchführbar ist.

Vereinfacht ausgedrückt, das Systemmittel ist eingerichtet zur Durchführung des benutzerunterstützten automatischen Texterkennungsverfahrens bei Logistikprozessen - unter Verwendung des Mittel zur benutzerunterstützen automatischen Texterkennung, des Mittels zum eye-tracking und des Anzeigemittels.

Anschaulich und vereinfacht, das Verfahren und das System zur benutzerunterstützten automatischen Texterkennung bei Logistikprozessen bzw. die benutzerunterstützte Texterkennung kombiniert eine automatische Texterkennung bei Logistikprozessen, wie beispielsweise dem automatischen Lesen/Erkennen von (Zustell-/Adress-)Informationen auf Postsendungen (Postlogistik) ("Postsendungskodierung") oder Gepäckstücken (Flughafenlogistik), mit einem eye-tracking - bei einem die Logistikprozesse, wie die Postlogistik- oder Flughafenlogistikprozesse, durchführenden Benutzer, beispielsweise einer Kodierkraft, welche (im Rahmen der Postsendungskodierung) "nicht erkannte logistische Güter" nachbearbeitet ("Benutzerunterstützung (mit eye-tracking)").

Der Benutzer, beispielsweise die Logistik-/Kodierkraft, bestimmt so insbesondere durch seinen Blick auf das (Logistik-) Bild - mittels des eye-trackings - denjenigen Bildbereich (Aktionsbereich) - mit zu lesendem und/oder zu erkennendem Textinhalt, wie eine Zustell-/Adressinformation, auf welchen bzw. für welchen dann das Texterkennungsverfahren angewandt bzw. durchgeführt werden soll.

Anders ausgedrückt, mittels eye-tracking bei einer "Logistikkraft" wird derjenige Bildbereich in dem "Logistikbild" bestimmt (Aktionsbereich), auf welchen bzw. für welchen eine Aktion der Texterkennung des Logistikprozesses durchgeführt wird. Der Aktionsbereich des/im Bild(es) ist dabei zweckmäßigerweise derjenige Bildbereich des/im Bild(es), welcher zu lesende bzw. zu erkennende Textinhalte, wie Zustell- oder Adressinformationen, enthält. Die Aktion der Texterkennung ist dann auch zweckmäßigerweise die Texterkennung bei diesen zu lesenden bzw. zu erkennenden Textinhalten.

Das "Logistikbild" kann auch (andere) Bereiche zeigend Steuerungs- oder Befehlsfelder aufweisen, welche dann andere Aktionen bei dem Texterkennungsverfahren bzw. bei der Texterkennung auslösen können (, werden sie durch den Benutzer/die Kodierkraft betrachtet, was durch das eye-tracking bestimm-/feststellbar ist).

Mit dem Verfahren und dem System lassen sich so die Logistikprozesse schneller, effizienter und zuverlässiger sowie ergebnissicherer und mit höherer Erkennungsrate durchführen bzw. dortige an sich automatische Prozesse, deren automatische Durchführung (zunächst) fehlgeschlagen sind (beispielsweise nicht gelesene (Zustell-)Informationen), mittels der Benutzerunterstützung nun "fehlerfreier" und (ergebnis-)sicherer und zuverlässigerer durch-/ausführen.

So hat sich beispielsweise gezeigt, dass mit dem Verfahren und dem System bzw. der benutzerunterstützten Texterkennung bei der Postlogistik, d. h. dem Bearbeiten von Postsendungen, wie insbesondere dem Postsendungskodieren, die Kodiergeschwindigkeit und Kodierzuverlässigkeit erheblich erhöht werden kann.

Zweckmäßig ist es insbesondere, wenn eine Art der durchgeführten Aktion, beispielsweise eine Texterkennung, insbesondere in dem Aktionsbereich (bzw. dann der bzw. in dem Texterkennungsbereich), ein Markieren ("Systemfeedback"), wie insbesondere des Aktions- oder Texterkennungsbereiches, oder einem Ausführen eines Steuerungsbefehls bei der automatischen Texterkennung, wie einem (Neu-)Laden, Speichern, Verwerfen, Vergrößern, Verkleinern, Drehen des bzw. eines Bildes und/oder Beenden des automatischen Texterkennungsverfahrens, abhängig ist von einer Fokussierungs-/Fixationsdauer des Benutzers beim Betrachten des Bildes und/oder einer Art des Blickes des Benutzers beim Betrachten des Bildes, wie einer Fixation eines Bildbereichs bzw. des Aktions-/Texterkennungsbereiches, einer Sakkade oder einer Regression des Benutzers beim Betrachten des Bildes.

Fokussierungs-/Fixationsdauer des Benutzers beim Betrachten des Bildes und/oder Art des Blickes des Benutzers beim Betrachten des Bildes werden dabei zweckmäßigerweise durch das bzw. beim eye-tracking erfasst/bestimmt.

Fixiert so beispielsweise der Benutzer, beispielsweise eine Kodierkraft (bei der Postsendungskodierung), auf dem ihr angezeigten Bild - im Beispielfall - einer Postsendung, beispielsweise eines Briefes oder Pakets, denjenigen Bildbereich zeigend beispielsweise eine Zustell-/Adressinformation, wie eine Postleitzahl (oder einen Straßennamen, eine Hausnummer oder einen Stadtnamen u. Ä.) - für eine bestimmte, vorgebbare Zeit, beispielsweise maximal eine halbe oder zehntel Sekunde, so kann in diesem (mittels des eye-trackings bestimmten) Bereich, d. h. in dem Aktions- bzw. Texterkennungsbereich, die Texterkennung durchgeführt werden.

Die Texterkennung bzw. das Texterkennungsverfahren kann dabei "abgestimmt" auf einen zu erkennenden Textinhalt durchgeführt werden, beispielsweise abgestimmt auf eine zu erkennende/lesende Postleitzahl, Straßennamen, Hausnummer oder Stadtnamen u. Ä. ("Spezialisierte Texterkennung" bzw. "spezialisierter, auf bestimmte Textelemente abgestimmter OCR-Retry-Leser").

Dazu kann beispielsweise die Texterkennung bzw. das Texterkennungsverfahren (jeweils) auf entsprechendes Vorwissen, beispielsweise in Form von "Wörterbüchern" (oder entsprechenden Datenbanken), zurückgreifen bzw. diese verwenden. Hierdurch kann die Erkennungsrate des automatischen Texterkennungsverfahrens erheblich erhöht werden.

Erfolgt die Fixation beispielsweise aber länger - beispielsweise mehr als eine halbe oder zehntel Sekunde, so kann zusätzlich zur Texterkennung auch noch eine weitere Aktion, wie insbesondere ein Markieren des Aktions- bzw. Texterkennungsbereiches, bei dem Texterkennungsverfahren durchgeführt werden. Ein solches Markieren kann beispielsweise ein farbiges Einfärben des Aktions- bzw. Texterkennungsbereiches sein (Systemfeedback an den Benutzer für - gegebenenfalls - Einleiten einer neuen Aktion).

Folgt der Fixation des Aktions- bzw. Texterkennungsbereichs beispielsweise aber unmittelbar eine Blickbewegung des Benutzers, d. h. die Kodierkraft blickt zunächst auf einen Bildbereich bzw. den Aktions-/Texterkennungsbereich, bzw. fokussiert diesen und bewegt dann ihren Blick auf einen anderen Bereich in dem Bild, beispielsweise auf einen (in dem Bild auch angezeigten) Befehls-/Steuerknopf ("Botton") bzw. -feld (d. h. das Bild zeigt - zusätzlich zu dem logistischen Gut - auch (in einem anderen Bildbereich) einen Befehls-/Steuerknopf ("Botton") bzw. -feld (vereinfacht ausgedrückt, alles (d. h., hier das Logistikgut sowie Befehls-/Steuerfelder), was am Bildschirm (gleichzeitig) angezeigt/eingeblendet wird, soll als Bild verstanden werden), so kann dann - gegebenenfalls ohne oder auch zusätzlich zu der Texterkennung in dem Aktions-/Texterkennungsbereich - auch wieder eine andere, weitere Aktion, wie ein Verschieben, Speichern, Drehen und/oder ein Vergrößern/Verkleinern des Aktions-/Texterkennungsbereichs oder ein Beenden des Texterkennungsverfahrens, bei dem Texterkennungsverfahren durch-/ausgeführt werden.

In dem so dann verschobenen, vergrößerten und/oder gedrehten Aktions-/Texterkennungsbereich kann dann gegebenenfalls eine bzw. wieder eine weitere Texterkennung durchgeführt werden.

Weiterhin kann es zweckmäßig sein, dass das benutzerunterstützte automatische Texterkennungsverfahren mehrfach hintereinander - hier dann als benutzerunterstützter Texterkennungsprozess - durchgeführt wird. Dieses jeweils bei bzw. mit ein und demselben Bild, wie auch bei bzw. mit unterschiedlichen bzw. jeweils neuen Bildern von logistischen Gütern.

So kann dann beispielsweise - bei jeder Aus-/Durchführung des benutzerunterstützten automatischen Texterkennungsverfahrens bei dem benutzerunterstützten Texterkennungsprozess - der/ein Aktionsbereich in dem (ein und demselben) dem Benutzer angezeigten Bild des Logistikgutes unter Verwendung von dem eye-tracking bei dem Benutzer beim Betrachten des Bildes (neu) bestimmt werden und jeweils in Abhängigkeit des jeweiligen bestimmten Aktionsbereichs eine Aktion des benutzerunterstützen automatischen Texterkennungsverfahren durchgeführt werden.

Hier ist es weiter insbesondere zweckmäßig, wenn das jeweilige durchgeführte benutzerunterstütze automatische Texterkennungsverfahren bzw. die Texterkennung "abgestimmt" auf den zu erkennenden bzw. zu lesenden jeweiligen Textinhalt ist.

Vereinfacht und beispielhaft ausgedrückt, mit einem ersten Blick des Benutzers erfasst dieser einen ersten Bildbereich (Aktionsbereich) bzw. eine erste zu lesende Bildinformation in dem Bild, beispielsweise eine Postleitzahl, für welchen/welche dann eine darauf abgestimmte automatische Texterkennung durchgeführt wird. Dann erfasst der Blick des Benutzers einen zweiten Bildbereich (Aktionsbereich) bzw. eine zweite zu lesende Bildinformation in dem Bild, beispielsweise einen Straßennamen, für welchen/welche dann wiederum eine darauf abgestimmte automatische Texterkennung durchgeführt wird. Weiter beispielsweise mit der Hausnummer in dem Bild und usw..

Die jeweiligen Aktionsbereiche können dabei auch, insbesondere unterschiedlich, wie andersfarbig, markiert werden ("Systemfeedback").

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem Verfahren und dem System zur benutzerunterstützten automatischen Texterkennung bei Logistikprozessen kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des bzw. der Ausführungsbeispiele der Erfindung, die im Zusammenhang mit den Zeichnungen näher erläutert werden. Das bzw. die Ausführungsbeispiele dient bzw. dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Es zeigen:
- FIG 1: einen Arbeitsplatz einer Kodierkraft mit einer benutzerunterstützen automatischen Texterkennung mittels eye-tracking in einer ersten Arbeitssituation;
- FIG 2: den Arbeitsplatz einer Kodierkraft mit der benutzerunterstützen automatischen Texterkennung mittels eye-tracking in einer zweiten Arbeitssituation;
- FIG 3: den Arbeitsplatz einer Kodierkraft mit der benutzerunterstützen automatischen Texterkennung mittels eye-tracking in einer dritten Arbeitssituation;
- FIG 4: einen Arbeitsplatz einer Kodierkraft mit einer weiteren benutzerunterstützen automatischen Texterkennung in einer ersten Arbeitssituation;
- FIG 5: den Arbeitsplatz einer Kodierkraft mit der weiteren benutzerunterstützen automatischen Texterkennung in einer zweiten Arbeitssituation;
- FIG 6: den Arbeitsplatz einer Kodierkraft mit der weiteren benutzerunterstützen automatischen Texterkennung in einer dritten Arbeitssituation.

### Mittels eye-tracking benutzerunterstütztes automatisches Texterkennungsverfahren bei Logistikprozessen, wie der Postsendungskodierung (FIGen 1 bis 3)

FIGen 1 bis 3 zeigen jeweils den Arbeitsplatz 14 einer Kodierkraft zur (Post-)Sendungskodierung 15.

Wie die FIGen 1 bis 3 zeigen ist dieser Arbeitsplatz 14 ausgestattet mit einem Computer (nicht gezeigt) mit Bildschirm 12, an welchem eine eye-tracking Kamera-Zeile 10 angebracht ist.

Auf dem Computer ist (System-)Software, wie eine Texterkennungssoftware, Software für die eye-tracking Kamera-Zeile 10, d. h. die eye-tracking Software (zur Analyse und Erkennung von Blicken/Blickverläufen eines Benutzers bzw. der Kodierkraft auf den/dem Bildschirm 12 bzw. dem dort angezeigten Bild 3) sowie Bildverarbeitungssoftware (zum Anzeigen von Bildern 3 auf dem Bildschirm 12) sowie Steuersoftware 13 (, welche durch die andere Software durchgeführte Prozesse steuert bzw. koordiniert) installiert.

Kurz, der Arbeitsplatz 14 ist mit einem Bildschirm 12, einem eye-tracking 5 und einer Texterkennung 1 sowie einer Systemsoftware 13 (alles zusammen vereinfacht im Folgenden nur als System 11 bezeichnet) ausgestattet.

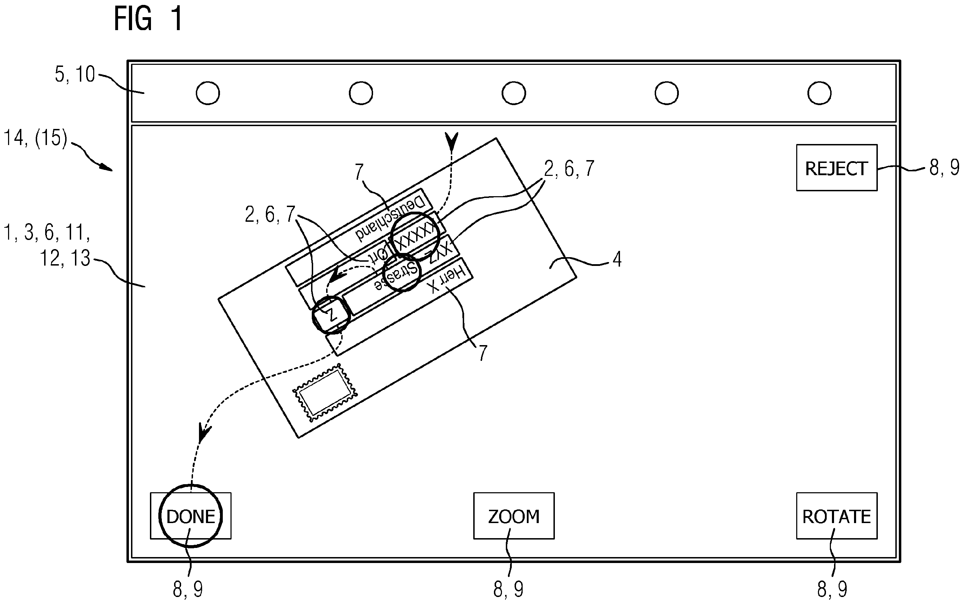

FIG 1 zeigt den Arbeitsplatz 14 in einer Arbeitssituation für die Kodierkraft, in welcher eine zuvor "nicht erkannte" Postsendung 4 (hier ein Brief 4) (d. h., hier schlug ein vorheriger Versuch die (Zustell-)Information 7 auf der Postsendung 4 bzw. dem Brief 4 automatisch zu lesen fehl) zum "manuellen" Kodieren auf dem Bildschirm 12 aufgeschaltet wurde.

D. h., der Bildschirm 12 zeigt - der Kodierkraft - das Bild 3 der "manuell" nachzubearbeitenden/-kodierenden Postsendung 4 inkl. auf der Postsendung 4 vorhandener/angebrachter (Zustell-)Informationen 7, hier Landesname 7, Postleitzahl 7, Stadtname 7, Straßenname 7, Hausnummer 7 und Empfängername 7.

Weiterhin sind, wie FIG 1 zeigt, auf dem auf dem Bildschirm 12 angezeigten Bild 3 der Postsendung 4 auch verschiedene Steuerfelder 8 (mit entsprechend semantisch dargestellten Steuerbefehlen 9) eingeblendet (und sollen so auch zugehörig zu dem Bild 3 bzw. als Teil des Bildes 3 verstanden werden - anders ausgedrückt, der gesamte einem Benutzer bzw. der Kodierkraft angezeigte Bildschirminhalt wird als Bild 3 bezeichnet), hier das Steuerfeld 8 "Done" (Beenden der Textverarbeitung), das Steuerfeld 8 "Rotate" (Drehen des Bildes), das Steuerfeld 8 "Zoom" (Vergrößern eines Bildbereichs) und das Steuerfeld 8 "Reject" (Verwerfen/Löschen eines Bildes und Neuladen eines Bildes).

Die Kodierkraft sucht, wie FIG 1 verdeutlicht, mit ihren Augen bzw. ihrem Blick die Postleitzahl 7 im Bild 3 der Postsendung 4 (--<--) und lässt die Augen bzw. ihren Blick dann darauf (o), beispielsweise ca. 0,15 bis 0,2 Sekunden, ruhen.

Das eye-tracking 5 bzw. das System 1 erkennt dies und hebt diesen Bereich 2 (farbig) hervor 6. Danach schaut (--<--) die Kodierkraft auf den Straßennamen 7, lässt die Augen bzw. ihren Blick dann darauf, wieder beispielsweise ca. 0,15 bis 0,2 Sekunden, ruhen (o) und schaut zuletzt auf die Hausnummer 7 (--<--) und lässt die Augen bzw. ihren Blick dann darauf, wieder beispielsweise ca. 0,15 bis 0,2 Sekunden, ruhen (o).

Das eye-tracking 5 bzw. das System 1 erkennt dann jeweils die Positionen/Bereiche 2 (von Straßenname 7 und Hausnummer 7) und hebt sie jeweils andersfarbig hervor 6.

Parallel dazu wird die Texterkennung 6 bzw. die OCR-Prozesse 6 gestartet, die in diesen Bereichen 2, d. h. dem Bereich 2 der Postleitzahl 7, dem Bereich 2 des Straßennamen 7, dem Bereich 2 der Hausnummer 7, versuchen die entsprechenden (Zustell-)Informationen 7 bzw. Adresselemente 7, wie die Postleizahl 7, den Straßennamen 7 und die Hausnummer 7, zu lesen/ermitteln 6.

Ist dies (erfolgreich) erfolgt, wird der Maschinenkode - kodierend die gelesenen (Zustell-)Informationen - erzeugt, welcher auf der (tatsächlichen) Postsendung angebracht wird.

Möchte die Kodierkraft die Postsendungskodierung 15 bzw. ihre Arbeit am Arbeitsplatz 14 beenden (weil beispielsweise alle (Zustell-)Informationen 7 markiert (und erfolgreich gelesen 6 sind)), so richtet sie, wie FIG 1 auch verdeutlicht, ihren Blick weiter auf das Steuerfeld 8 "Done" im Bild 3 und fokussiert dieses für ca. 0,15 bis 0,2 Sekunden - als Kommando zur Ausführung des Steuerbefehls 9. Das System 11 wird dann beendet 6.

Falls Teile der (Zustell-)Information 7 (wieder) nicht automatisch erkannt werden können, wie beispielsweise hier angenommen (nur) die Hausnummer 7, ist bzw. sind bereits die relevanten Bereiche 2, hier beispielswiese dann der Bereich 2 der Hausnummer 7, bekannt und können im Folgenden größer und lesbarer dargestellt werden 6 - und/oder z. B. an eine andere Kodierkraft weitergegeben werden.

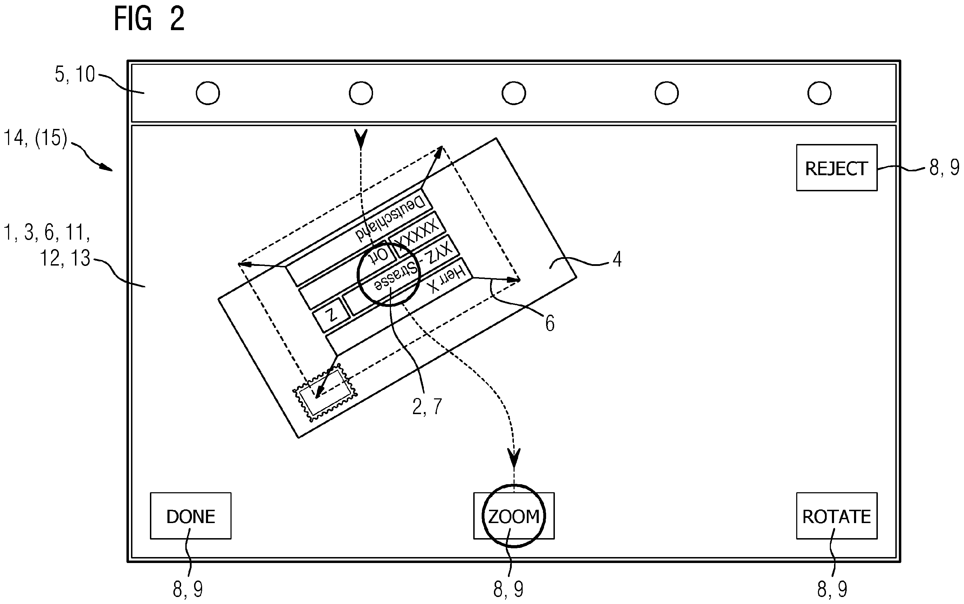

War anfangs der Bildausschnitt, welcher die (Zustell-)Informationen 7 auf der Postsendung zeigt, zu klein (und so beispielsweise nicht lesbar), dann fokussiert die Kodierkraft, wie FIG 2 verdeutlicht, den Bereich 2 der (Zustell-)Informationen 7 für ca. eine zehntel Sekunde (o) und bewegt dann die Augen bzw. den Blick auf das Steuerfeld 8 "Zoom" im Bild 3 (-->--, o) als Kommando zur Ausführung des Steuerbefehls 9. Der Bereich 2 der (Zustell-)Information 7 wird dann vergrößert (auf dem Bildschirm dargestellt) 6.

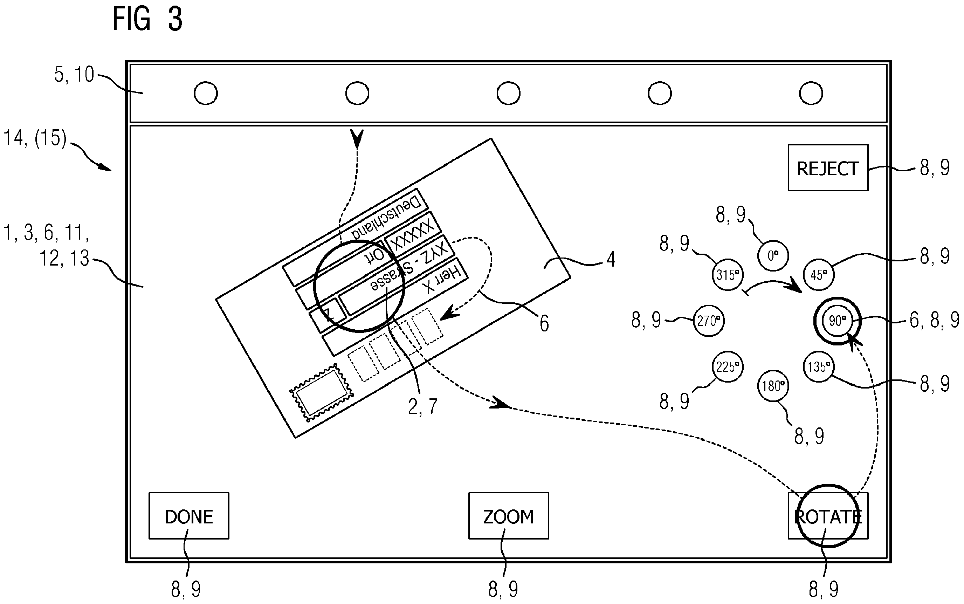

Der Bildausschnitt, welcher die (Zustell-)Informationen 7 zeigt, kann auch - mit Augengesten/-bewegungen bzw. Blickbewegungen - gedreht werden 6. Hierzu wird, wie FIG 3 verdeutlicht, zunächst wieder der Bereich 2 der (Zustell-)Informationen 7 für ca. eine zehntel Sekunde fokussiert und dann der Blick auf das Steuerfeld 8 "Rotate" im Bild 3 gerichtet (-->--, o).

Im Bild 3 erscheinen nun weitere Steuerfelder 8 mit Winkelangaben, die eine - entsprechend der Winkelangaben - Drehung 6 des anfänglich fokussierten Bereichs 2, d. h. des Bereichs 2 der (Zustell-)Informationen 7, auslösen (9).

Die Kodierkraft fokussiert (o) das Steuerfeld 8 mit der gewünschten Winkelangabe, hier, wie FIG 3 zeigt, beispielsweise 90°, dieses wird, wie FIG 3 auch verdeutlicht, farbig eingefärbt 6 - und die Drehung 6 des Bereichs 2 der (Zustell-)Informationen 7 wird (am Bildschirm) durchgeführt.

### Benutzerunterstütztes automatisches Texterkennungsverfahren bei Logistikprozessen, wie der Postsendungskodierung (FIGen 4 bis 6)

FIGen 4 bis 6 zeigen jeweils einen weiteren Arbeitsplatz 14 einer Kodierkraft zur (Post-)Sendungskodierung 15.

Wie die FIGen 4 bis 6 zeigen ist dieser Arbeitsplatz 14 ausgestattet mit einem Computer (nicht gezeigt) mit Bildschirm 12. Auf dem Computer ist (System-)Software 13, wie eine Texterkennungssoftware sowie Bildverarbeitungssoftware (zum Anzeigen und Bearbeiten von Bildern 3 auf dem Bildschirm 12) sowie Steuersoftware 13 (, welche durch die andere Software durchgeführten Prozesse steuert bzw. koordiniert) installiert.

Kurz, der Arbeitsplatz 14 ist mit einem Bildschirm 12, einer Texterkennung sowie einer Systemsoftware 13 (alles zusammen vereinfacht im Folgenden nur als System bezeichnet) ausgestattet.

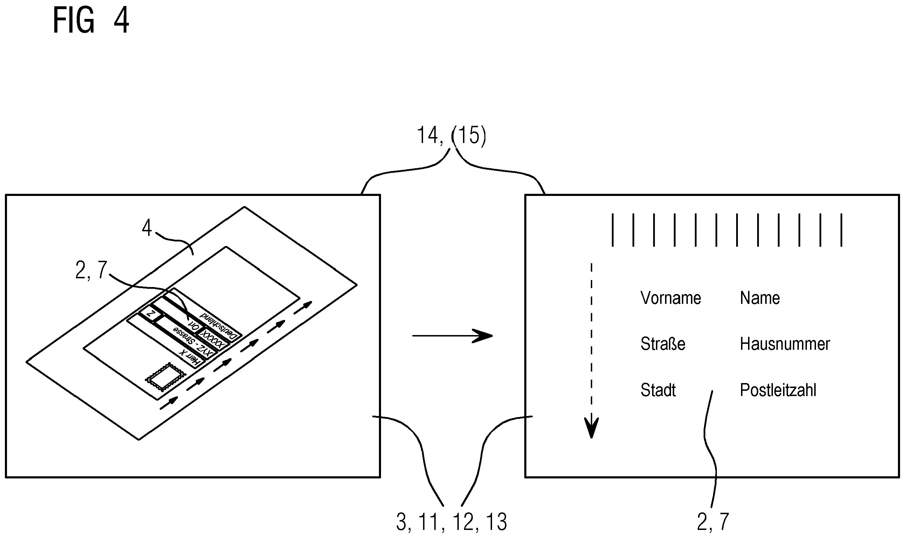

FIG 4, linke Seite ("Benutzeraktion") zeigt den Arbeitsplatz 14 in einer Arbeitssituation für die Kodierkraft, in welcher eine zuvor "nicht erkannte" Postsendung 4 (hier ein Brief 4) (d. h., hier schlug ein vorheriger Versuch die (Zustell-)Informationen 7 auf der Postsendung 4 automatisch zu lesen fehl) zum "manuellen" Kodieren auf dem Bildschirm 12 aufgeschaltet wurde.

D. h., der Bildschirm 12 zeigt - der Kodierkraft - das Bild 3 der "manuell" nachzubearbeitenden/-kodierenden Postsendung 4 inkl. auf der Postsendung 4 vorhandenen/angebrachten (Zustell-)Informationen 7, hier Landesname, Postleitzahl, Stadtname, Straßenname, Hausnummer und Empfängername.

Dabei ist - wie FIG 4, linke Seite (Benutzeraktion) auch zeigt - die Postsendung 4 in einer Lage in dem Bild 3 gezeigt, in welcher die (Zustell-)Informationen 7 - hier als Adressfeld - "auf dem Kopf stehend" ausgerichtet ist.

Wie FIG 4, linke Seite (Benutzeraktion) verdeutlicht, streicht (->.->.->) - zur Markierung der (Zustell-)Informationen 7 bzw. des Adressfeldes - die Kodierkraft in dieser Arbeitssituation - mit Maus oder Touchscreen - über die "linke" Kante der (Zustell-)Informationen 7 bzw. Adressregion 2 von oben nach unten (oder ggf. schräg über das ganze Adressfeld von dessen oberen linken Ecke und dessen unteren rechten Ecke) ("(Markierungs-)Geste").

D. h., mit einer einzigen (Markierungs-)Geste werden so Größe und Lage einer "Region Of Interest" (ROI) - zuverlässig und schnell - kodiert.

Sowie die Benutzeraktion (vgl. FIG 4, linke Seite) abgeschlossen ist (loslassen der Maus oder Touchscreen), reagiert das System 11 sehr schnell mit der Systemreaktion (vgl. FIG 4, rechte Seite) und zeigt, wie FIG 4, rechte Seite (Systemreaktion) auch zeigt, das Adressfeld bzw. die (Zustell-) Informationen 7 in der nun "richtigen" Lage (Textausrichtung von links nach rechts und von oben nach unten) an.

Es ist weiterhin an diesem Arbeitsplatz 14 möglich, die (Zustell-)Informationen 7 bzw. das Adressfeld auch wieder herauszuzoomen und den Vorgang zu wiederholen.

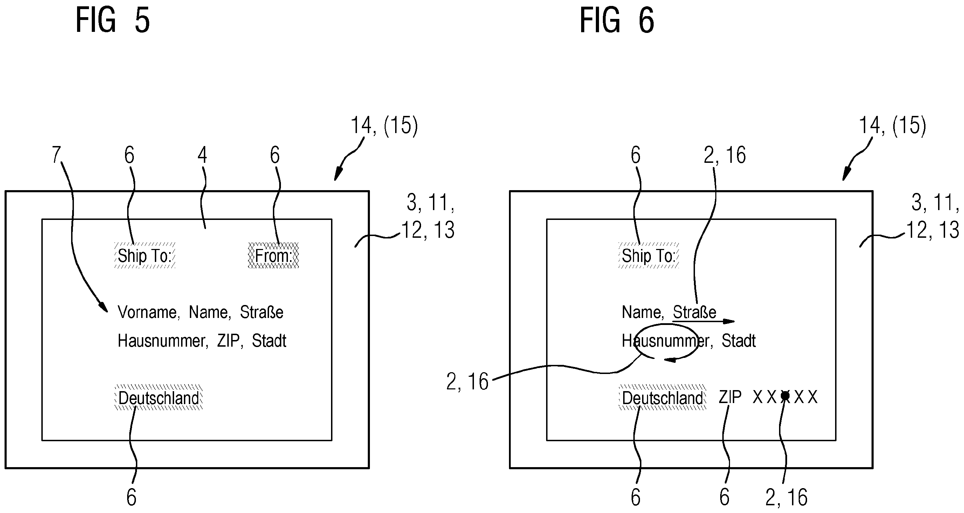

Parallel zu der Anzeige der (Zustell-)Informationen 7 bzw. des Adressfeldes in der nun "richtigen" Lage am Bildschirm 12 (vgl. FIG 4, rechte Seite), werden, wie FIG 5 zeigt, für die (Zustell-)Informationen 7 bzw. wird für das Adressfeld die Texterkennung ("spezieller Retry-Leser") durchgeführt, welche (Zustell-)Schlüsselwörter, wie hier beispielsweise "Ship to:", "TO:", "Deutschland", etc. erkennt.

Die gefundenen (Zustell-)Schlüsselwörter werden, wie FIG 5 verdeutlicht, zur besseren Orientierung der Kodierkraft farblich hinterlegt, was der Kodierkraft hilft relevante Information - schnell und zuverlässig - zu finden.

Eventuell kann dieser spezielle Retry-Leser auch bereits - mittels Lage und Größe der (Zustell-)Informationen 7 bzw. Adressregion - die Adresse ermitteln.

Andernfalls können, wie FIG 6 verdeutlicht, (Zustell-) Informationen - selektiv - mittels verschiedener, für die jeweilige (Zustell-)Information 7 spezifischer Markierungsoperationen 16 ("selektive Geste") markiert werden. Auch diese kodieren wieder mit einer einzigen Geste Lage und Größe der ROI:
a) Postleitzahl durch Punkt auf Mitte der PLZ
b) Straßenname durch Streichen über den selektivsten Teil des Straßennamens, also z. B., bei "XYZ-Straße" nur über "XYZ"
c) halbes oder ganzes Einkreisen der Hausnummer (, dadurch kann der Kodierkraft die Information gegeben werden, ob es eine "kurze nummerische Hausnummer (z. B. "13"), oder eine nicht-standard Nummer wie "13 BIS" ist).

Nachdem diese Markierungsoperationen 16 erfolgt sind, wird ein spezieller Retry-Leser aufgerufen, der die markierten Bereiche 2 erhält und mit dem Wissen der Positionen der markierten (Zustell-)Informationen 7 besser in der Lage ist, schwierige Adressen automatisiert zu lesen ("Spezialisierter Retry-Leser auf Element-Ebene").

Erfolgt so die Kodierung auf einzelne Adress-Elemente über verschiedene Gesten (anstelle einer Adressfeldcodierung im Gesamten), müssen nicht alle Elemente in der gleichen Reihenfolge kodieren werden.

Zusätzlich werden alle von Kodierkräften am Arbeitsplatz 15 markierten (Zustell-)Informationen 7 mit den dazugehörigen Bildern 3 gespeichert und einem Label Learning System zur Verfügung gestellt, so dass die Labels automatisch oder halbautomatisch trainiert werden können.

Z. B. können ähnliche Postsendungen 4 gesucht werden und dem System 11 bei neuen Sendungen 4 die potentielle Lage des Postcodes oder Hausnummer bereits mitgegeben werden.

Obwohl die Erfindung im Detail durch das bzw. die bevorzugten Ausführungsbeispiele näher illustriert und beschrieben wurde, so ist die Erfindung nicht durch das bzw. die offenbarten Beispiele eingeschränkt und andere Variationen können hieraus abgeleitet werden, ohne den Schutzumfang der Erfindung zu verlassen.

## Patentansprüche

1. Benutzerunterstütztes automatisches Texterkennungsverfahren (1) bei Logistikprozessen
**dadurch gekennzeichnet, dass**
die Benutzerunterstützung bei dem benutzerunterstützten automatischen Texterkennungsverfahren (1) derart erfolgt, dass ein Aktionsbereich (2) in einem einem Benutzer angezeigten Bild (3) zeigend zumindest ein Logistikgut (4) unter Verwendung von eye-tracking (5) bei dem Benutzer beim Betrachten des Bildes (3) bestimmt wird, und in Abhängigkeit des bestimmten Aktionsbereichs (2) eine Aktion (6) des benutzerunterstützten automatischen Texterkennungsverfahren (1) durchgeführt wird.

2. Benutzerunterstütztes automatisches Texterkennungsverfahren (1) nach mindestens einem der voranstehenden Ansprüche
**dadurch gekennzeichnet, dass**
eine Art der durchgeführten Aktion (6) abhängig ist von einer Fokussierungsdauer des Benutzers beim Betrachten des Bildes (3) und/oder einer Art des Blickes, insbesondere einer Fokussierung, Sakkade oder Regression, des Benutzers beim Betrachten des Bildes (1).

3. Benutzerunterstütztes automatisches Texterkennungsverfahren (1) nach mindestens einem der voranstehenden Ansprüche
**dadurch gekennzeichnet, dass**
die Aktion (6) eine Texterkennung (6), ein Markieren (6) und/oder ein Ausführen eines Steuerungsbefehls (6) ist.

4. Benutzerunterstütztes automatisches Texterkennungsverfahren (1)nach mindestens einem der voranstehenden Ansprüche
**dadurch gekennzeichnet, dass**
der bestimmte Aktionsbereich (2) ein Texterkennungsbereich (2) mit einem zu erkennenden Text (7) ist, in welchem Texterkennungsbereich (2) eine automatische Texterkennung (6) als die Aktion (6) des benutzerunterstützen automatischen Texterkennungsverfahrens (1) durchgeführt wird.

5. Benutzerunterstütztes automatisches Texterkennungsverfahren (1)nach Anspruch 4
**dadurch gekennzeichnet, dass**
der zu erkennende Text (7) eine Zustell- und/oder Adressinformation (7) für das Logistikgut (4), insbesondere einen Stadtcode (7), einen Landescode (7), eine Postleitzahl (7), einen Stadtnamen (7), einen Straßennamen (7), eine Hausnummer (7) und/oder einen Personen-/Empfängernamen (7), beinhaltet.

6. Benutzerunterstütztes automatisches Texterkennungsverfahren (1)nach Anspruch 4 oder Anspruch 5
**dadurch gekennzeichnet, dass**
der Texterkennungsbereich (2) markiert (6) wird.

7. Benutzerunterstütztes automatisches Texterkennungsverfahren (1) nach einem der voranstehenden Ansprüche
**dadurch gekennzeichnet, dass**
das dem Benutzer angezeigte Bild (3) auch zumindest ein Befehlsfeld (8) und/oder ein Steuerungsfeld (8) zeigt.

8. Benutzerunterstütztes automatisches Texterkennungsverfahren (1) nach einem der voranstehenden Ansprüche
**dadurch gekennzeichnet, dass**
der bestimmte Aktionsbereich (2) einen Steuerungsbefehl (9) für eine Steuerungsaktion (6) für das automatische Texterkennungsverfahren (1) zeigt, welche Steuerungsaktion (6) als die Aktion (6) des benutzerunterstützen automatischen Texterkennungsverfahrens (1) ausgeführt wird.

9. Benutzerunterstütztes automatisches Texterkennungsverfahren (1) nach einem der voranstehenden Ansprüche
**dadurch gekennzeichnet, dass**
das durchzuführende automatische Texterkennungsverfahren (1) ein auf einen zu erkennenden Textinhalt (7) abgestimmtes Texterkennungsverfahren (1) ist.

10. Benutzerunterstütztes automatisches Texterkennungsverfahren (1) nach einem der voranstehenden Ansprüche
**dadurch gekennzeichnet, dass**
das eye-tracking (5) unter Verwendung eines eye-trackers (10), insbesondere einer oder mehrerer Kameras (10), einer Kamera-Zeile/-Bar (10) oder einer eye-tracking Brille (10), durchgeführt wird.

11. Benutzerunterstützter Texterkennungsprozess
**bei dem**
das benutzerunterstützte Texterkennungsverfahren (1) nach einem der voranstehenden Ansprüche mehrfach hintereinander ausgeführt wird, wobei jedes Mal ein Aktionsbereich (2) in einem, insbesondere dem einen, dem Benutzer angezeigten Bild (3) des Logistikgutes (4) unter Verwendung von dem eye-tracking (5) bei dem Benutzer beim Betrachten des Bildes (3) bestimmt wird, und jeweils in Abhängigkeit des jeweiligen bestimmten Aktionsbereichs (2) eine Aktion (6) des automatischen Texterkennungsverfahren (1) durchgeführt wird.

12. System (11) zur benutzerunterstützten automatischen Texterkennung (1) bei Logistikprozessen mit einer benutzerunterstützen automatischen Texterkennung (1) durchführbar bei einem Bild (3), einem eye-tracking (5) durchführbar bei einem Benutzer und einem Anzeigemittel (12) zum Anzeigen eines Bildes (3)
**dadurch gekennzeichnet, dass**
ein Systemmittel (13) zur Durchführung der benutzerunterstützten automatischen Texterkennung (1) bei Logistikprozessen derart eingerichtet ist, dass ein Aktionsbereich (2) in einem einem Benutzer von dem Anzeigemittel (12) angezeigten Bild (3) zeigend zumindest ein Logistikgut (4) unter Verwendung von dem eye-tracking (5) bei dem Benutzer beim Betrachten des Bildes (3) bestimmbar ist, und in Abhängigkeit des bestimmten Aktionsbereichs (2) eine Aktion (6) der benutzerunterstützen automatischen Texterkennung (1) durchführbar ist.
